# EUROPEAN PATENT APPLICATION

(11) **EP 1 308 762 A1**
(43) Date of publication of application: **07.05.2003**
(21) Application number: 01402854.2
(22) Date of filing: 06.11.2001
(51) Int. Cl.: G02B 6/42

(54) **Package assembly and method for hermetically sealing an optical component**

(71) Applicant: CORNING INCORPORATED, Corning, N.Y. 14831 (US)
(72) Inventor: Fendler, Manuel, Corning Incorporated, Corning, NY 14831 (US)
(74) Representative: Boon, Graham Anthony

(57) **Abstract**

A package assembly (10) and method for hermetically sealing an optical component (12) while allowing hermitically sealed entry and exit of optical fibers (14,15) from the package assembly, the package assembly including a package housing (16), a first and second feed-through components (20,24) for feeding the optical fiber through the package housing, the feed-through components including a support plate (22,26) adapted to be secured to the ends of the package housing. The feed-through components may include a tube with an axial opening sized to receive an optical fiber, and a radial opening that intersects the axial opening to allow addition of a fiber sealant to seal the axial opening. The radial opening may be axially positioned along the tube so that a stripped region of the optical fiber is positioned to intersect the radial opening while the fiber sealant may be a low melting point glass adapted to be melted around the stripped region of the optical fiber.

## Description

### BACKGROUND OF THE INVENTION

### Field of the Invention

The present invention is directed to a package assembly and method for hermetically sealing an optical component.

### Description of Related Art

Optical devices such as semiconductor optical modules, gratings, lasers, fiber based optical device, optical waveguides as well as other optical devices used in fiber optic systems are typically hermetically sealed in an air and moisture tight package assembly in order to prevent the optical device from being influenced or degraded by moisture or other environmental conditions. The requirements for hermetically sealing the optical devices depends on a number of factors, including reliability requirements, the optical device itself and the use environment. These optical devices need to be optically connected to other components of the fiber optic system. Typically, the hermetically sealed package must allow optical fibers to pass through the walls of the hermetic package to allow the optical device within the package to be optically connected to other optical components or devices. The hermetic integrity of the package must be maintained while allowing the optical fibers access to the optical device contained within the package. Whereas various different package assemblies have been proposed, finding a viable solution to hermetically sealing the optical fiber as it enters and exits the package assembly has been very difficult.

One known package assembly and method is disclosed in U.S. Patent No. 4,357,072 to Goodfellow et al. in which metallized fibers are fed through tubes coated with nickel and gold, and sealed to the tubes using a metal solder. However, the process of metallizing the fiber is very difficult and requires stacking many layers of different materials in order to ensure good adhesion to the fiber and good wettability to the metal solder. Metallized fibers are also very fragile and so the package assembly process becomes even more difficult to implement reliably and on a cost effective basis. As a result, this package assembly and method has not been readily adapted for use in volume manufacturing of package assemblies.

Another package assembly and method is disclosed in U.S. Patent No. 4,904,046 to Paschke et al. in which a low melting temperature glass (also known as solder glass) is melted inside a tube that contains the optical fiber to thereby seal the optical fiber in the tube. A similar approach is also disclosed in U.S. Patent 5,515,473 to Yamauchi et al. in which the optical fiber is inserted in two glass tubes before feeding through a metal tube. The glass solder is positioned between the two glass tubes in the center of the metal tube and the glass solder is melted with inductive heating to thereby seal the optical fiber in the glass tubes and the metal tube. In both of these approaches, the assembled metal tube (also known as plug tube) is then fed through the wall of the package housing and then sealed to the wall using conventional metal solder and soldering techniques. Although much more reliable and cost effective than that disclosed in Goodfellow et al., these package assemblies and methods require that the optical component or device be connected to the fibers ("pigtailed") inside the package after the insertion of the plug tubes. Such connection is often very difficult and complicates the assembly process. Consequently, the manufacture and assembly of the package assemblies described in these references are still relatively expensive. These methods and designs also have high rejection rates due to difficulties in the assembly process, making it difficult to readily use these methods and designs for volume manufacturing.

Therefore, despite the above discussed known package assemblies and methods, there still exists an unfulfilled need for reliable, simple, and cost effective hermetically sealed package assemblies and methods for making them for use in optical communication systems.

### SUMMARY OF THE INVENTION

In view of the foregoing, the present invention has the advantage of providing a reliable package assembly and method for hermetically sealing optical components.

The present invention has the advantage of providing a package assembly and method for hermetically sealing optical components which is simple in design and use.

Still another advantage of the present invention is in providing a cost effective package assembly and method for hermetically sealing optical components.

In accordance with the present invention, a hermetic package assembly for an optical component having a first and a second optical waveguide fibers extending therefrom is provided. The package assembly includes a package housing defining a compartment sized to receive the optical component therein, the package housing having a first opening and a second opening which is smaller than the first opening, a first feed-through component coupled to the package housing, the first feed-through component including a first fiber feed-through opening, and a second feed-through component coupled to the package housing, the second feed-through component including a second fiber feed-through opening, where the optical component is disposed within the compartment, the first feed-though component is hermetically sealed to the package housing, and the second feed-through component is hermetically sealed to the package housing. The first optical waveguide fiber extends from the compartment to the outside of the package assembly through the first fiber feed-through opening, where a hermetic seal is formed between the first optical waveguide fiber and first fiber feed-through component, and the second optical waveguide fiber extends from the compartment to the outside of the package assembly through the second fiber feed-through opening, where a hermetic seal is formed between the second optical waveguide fiber and second fiber feed-through component.

In accordance with one embodiment of the present invention, at least one of the first opening and the second opening is sized to allow insertion of the optical component into the compartment. In another embodiment, the first feed-through component includes a first support plate coupled to the package housing. Yet in another embodiment, the second feed-through component further includes a second support plate coupled to the package housing. At least one of the first feed-through component and the second feed-through component is secured to the package housing by a hermetic sealant in one embodiment. In another embodiment, the hermetic sealant is a preform having an opening sized to correspond to at least one of the first opening and the second opening, the preform being adapted to be softened and cured to secure the at least one of the first feed-through component and the second feed-through component to the package housing.

In one embodiment of the present invention, at least one of the first feed-through component and the second feed-through component includes a tube with an axial opening sized to receive an optical fiber therein. In this regard, the tube also includes a radial opening that intersects the axial opening. In still another embodiment, the hermetic seal between the first optical waveguide fiber and first fiber feed-through component is formed from a low melting point glass adapted to be melted around a stripped region of the first optical fiber. Likewise, the hermetic seal between the second optical waveguide fiber and second fiber feed-through component is formed from a low melting point glass adapted to be melted around a stripped region of the second optical fiber in another embodiment.

In accordance with another aspect of the present invention, the above noted advantages are attained by a method of hermetically sealing an optical component in a package assembly is provided including the steps of providing a package housing with a compartment sized to receive the optical component therein, the package housing having a first end with a first opening and a second end with a second opening which is smaller than the first opening, providing a first feed-through component for feeding the optical fiber through the package housing, the first feed-through component including a support plate sized larger than the first opening, providing a second feed-through component for feeding the optical fiber through the package housing, the second feed-through component including a support plate sized larger than the second opening and smaller than the first opening, inserting the second feed-through component into the interior compartment of the package housing through the first opening until the support plate abuts the second end of the package housing inside the interior compartment, securing the support plate of the second feed-through component to the second end of the package housing inside the interior compartment to seal the second opening, positioning the first feed-through component at the first end of the package housing outside the interior compartment, and securing the support plate of the first feed-through component to the first end of the package housing outside the interior compartment to seal the first opening.

In accordance with another embodiment, the present method also includes the step of hermetically sealing the support plate of at least one of the first feed-through component and the second feed-through component to the package housing with a hermetic sealant. In this regard, in another embodiment, the hermetic sealant is a preform having an opening sized to correspond to at least one of the first opening and the second opening, the method further comprising the step of melting and curing the preform to secure the at least one of the first feed-through component and the second feed-through component to the package housing.

In another embodiment, at least one of the first feed-through component and the second feed-through component includes a tube with an axial opening sized to receive an optical fiber therein. In this regard, the tube also includes a radial opening that intersects the axial opening, the method also including the step of adding a fiber sealant into the radial opening to seal the axial opening with the optical fiber therein. The method further includes the step of stripping a region of the optical fiber and axially positioning the stripped portion along the tube so that the stripped region of the optical fiber is positioned to intersect the radial opening in another embodiment. The fiber sealant is a low melting point glass, and the method further includes the step of melting the glass around the stripped region of the optical fiber.

These and other advantages and features of the present invention will become more apparent from the following detailed description of the preferred embodiments of the present invention when viewed in conjunction with the accompanying drawings.

### BRIEF DESCRIPTION OF THE DRAWINGS

Figure 1 is a schematic sectional view of a package assembly for hermetically sealing an optical component in accordance with one embodiment of the present invention.

Figure 2A is a schematic sectional view of an optical component, the first and second feed-through components and the optical fiber to be inserted into a package housing in accordance with one embodiment of the present method.

Figure 2B is a schematic sectional view of a package housing into which the components of Figure 3A is inserted.

Figure 2C is an axial view of the housing of Figure 2B including hermetic sealant preforms in accordance with one embodiment of the present invention.

Figure 3 shows the components of Figure 2A after they are inserted into the package housing of Figure 2B but before curing the hermetic sealant preforms in accordance with one embodiment of the present method.

Figure 4A is an example illustration of a hermetic sealant in accordance with one embodiment which has not yet been cured.

Figure 4B is the hermetic sealant of Figure 4A as it is being cured.

Figure 4C is the hermetic sealant of Figure 4B after it is cured.

Figure 5 is a flow diagram showing a method of hermetically sealing an optical component in a package assembly in accordance with one embodiment of the present invention.

Figure 6 is an enlarged perspective view of a feed-through component in accordance with one embodiment of the present invention.

Figure 7 is an enlarged sectional schematic view of the feed-through component of Figure 6 and a fiber sealant used to seal the stripped portion of the optical fiber.

Figure 8 is a flow diagram showing a method of sealing an optical fiber in a feed-through element in accordance with one embodiment of the present invention.

### DETAILED DESCRIPTION OF THE PREFERRED EMBODIMENT

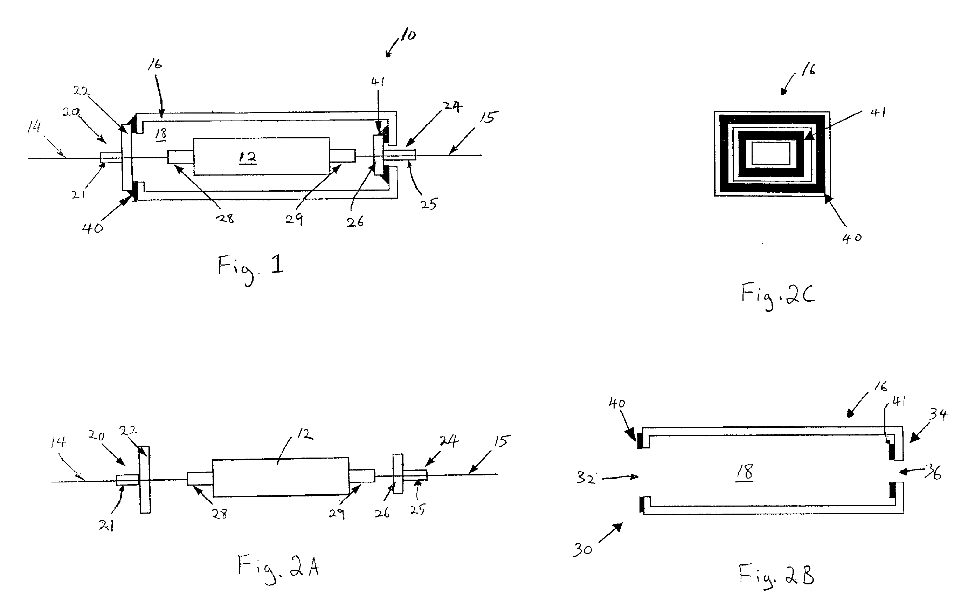

Figure 1 shows a schematic sectional view of a package assembly 10 in accordance with one embodiment of the present invention which, as will be discussed hereinbelow, provides a reliable, simple, and cost effective package assembly and method for hermetically sealing an optical component 12. The package assembly 10 hermetically seals the optical component 12 while allowing hermetically sealed entry and exit of optical fibers 14 and 15 from the package assembly 10. As can be seen in the illustrated embodiment, the package assembly 10 includes a package housing 16 with an interior compartment 18 sized to receive the optical component 12 therein. The package housing 16 is made of any appropriate material including metals, plastics or other materials such as Kovar®. In addition, whereas the package housing 16 (and thus, the package assembly 10) shown in the presently discussed embodiment has a rectangular box shape, in other embodiments, the package housing 16 has a different shape such as tubular, circular, or other shape. Moreover, in still other embodiments, the package housing 16 is also provided with electrical connections (not shown) that is used to monitor or otherwise control the optical component 12 in the package housing 16. The package assembly 10 also includes a first feed-through component 20 for feeding the optical fiber 14 through the package housing 16 to the optical component 12. In a similar manner, the package assembly 10 also includes a second feed-through component 24 for feeding the optical fiber 15 through the package housing 16 to the optical component 12. The illustrated embodiments of the first and second feed-through components 20 and 24 are discussed in further detail after discussions regarding the package assembly 10 as a whole below.

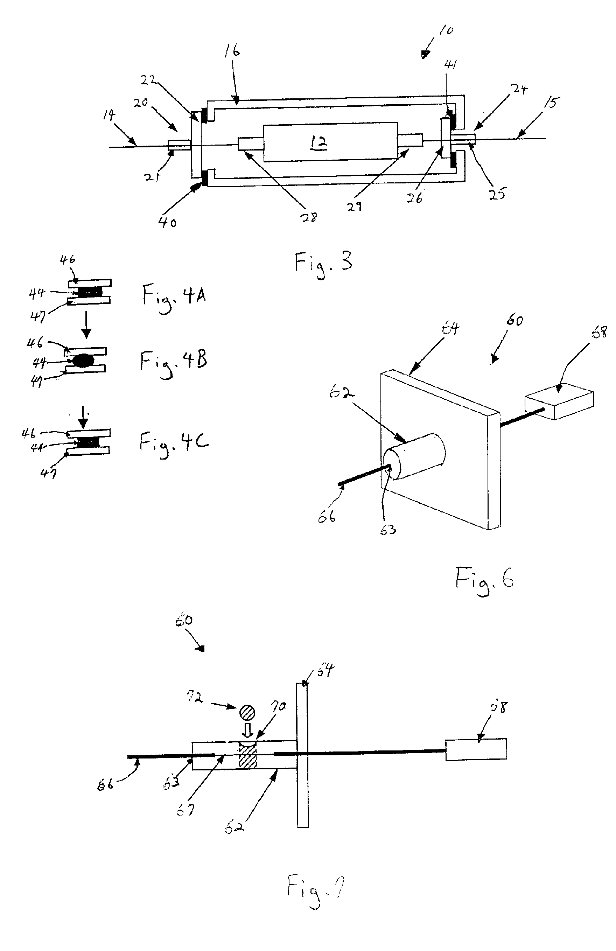

Figures 2A and 2B show various components of the package assembly 10 prior to assembly in accordance with one embodiment of the present method. In this regard, Figure 2A shows a schematic sectional view of the optical component 12, and the second feed-through component 24, as well as the optical fiber 15 that are to be inserted into a package housing 16 shown separately in Figure 2B. As can be seen from Figure 2B, the package housing 16 of the package assembly 10 has a first end 30 with a first opening 32 and a second end 34 with a second opening 36 which in the present illustrated embodiment, is smaller than the first opening 32. The first opening 32 of the first end 30 is sized to allow insertion of optical component 12 and the second feed-through component 24 shown in Figure 2A into the interior compartment 18 of the package housing 16 of Figure 2B so as to provide an inserted assembly shown in Figure 3. In this regard, the insertion of the optical component 12 and the second feed-through component 24 into the interior compartment 18 of the package housing 16 can be more easily obtained in the present embodiment if these components are oriented vertically so that the optical component 12 and the second feed-through component 24 can be lowered into the interior compartment 18 thereby providing an easy assembly process.

Referring again to Figure 2A, the first feed-through component 20 includes a tube 21 as well as a support plate 22 sized larger than the first opening 32 so that the first feed-through component 20 can be secured to the first end 30 of the package housing 16 outside the interior compartment 18. The second feed-through component 24 includes a tube 25 as well as a support plate 26 which in the illustrated embodiment, is sized larger than the second opening 36 and smaller than the first opening 32 so that the second feed-through component 24 can be secured to the second end 34 of the package housing 16 inside the interior compartment 18. As can be seen, the optical fibers 14 and 15 pass through the first feed-through component 20 and the second feed-through component 24 respectively. In this regard, in the illustrated example, the optical fibers 14 and 15 are provided with connectors 28 and 29 respectively to allow optical connection to the optical component 12. The package assembly 10 shown in Figure 1 is a completely assembled package assembly in accordance with one embodiment of the present invention as discussed in further detail below.

In the illustrated embodiment, the first feed-through component 20 and the second feed-through component 24 is secured to the package housing 16 by hermetic sealant 40 and 41 of Figure 2B which shows the hermetic sealant 40 and 41 before melting and curing. In this regard, the hermetic sealant 41 is made as preforms as shown most clearly in Figure 2C which is an axial view of the housing of Figure 2B. As can be seen, the preforms 40 and 41 are shaped to have an opening sized to correspond to the first opening 32 and the second opening 36 of the package housing 16 respectively. Because in this illustrated example, the package housing 16 is rectangular in cross-section, the preforms 40 and 41 are also correspondingly rectangular as shown in Figure 2C. The preforms 40 and 41 can then be melted and cured in the manner described in further detail below to secure the first feed-through component 20 and the second feed-through component 24 to the package housing 16.

Figure 3 shows the components of Figure 2A after they have been inserted into the package housing 16 of Figure 2B but before curing the hermetic sealant preforms 40 and 41 in accordance with one embodiment of the present method. As can be appreciated, by providing the hermetic sealant as preforms 40 and 41, the assembly of the package assembly 10 together with the optical component 12 is greatly facilitated. As apparent in Figure 3, the preform 40 is placed between the support plate 22 and the first end 30 of the package housing 16 so that the first feed-through component 20 can be secured to the first end 30 outside the interior compartment 18 of the package housing 16. In addition, the preform 41 is placed between the support plate 26 and the second end 34 so that the second feed-through component 24 can be secured to the second end 34 inside the interior compartment 18 of the package housing 16.

The preforms 40 and 41 as shown in Figure 2C are adapted to be melted and cured to secure the respective feed-through components to the package housing 16. In this regard, the preforms 40 and 41 is made of any appropriate hermetic sealant including solders such as tin (Sn) used in the related arts but may also be resins or adhesives. Figures 4A to 4C show a sample hermetic sealant solder 44 which can be used for the preforms 40 and 41 in accordance with an embodiment that is melted and cured. In this regard, Figure 4A shows an example illustration of an uncured hermetic sealant 44 which is provided between a first component 46 and a second component 47. Of course, the first component 46 and the second component 47 are not actually components of the package assembly in accordance with the present invention but are merely provided to clearly illustrate the use of the hermetic sealant 44 in accordance with the present method in which solder is used. In particular, Figure 4B shows the melting of the hermetic sealant 44 of Figure 4A by melting the tin solder at approximately 118° C. Figure 4C shows the hermetic sealant 44 of Figure 4B after it has fully cured thereby securing the first component 46 and the second component 47 together. In a similar manner, the first feed-through component 20 and the second feed-through component 24 can be secured to the package housing 16 as shown in Figure 1 by melting and curing the preforms 40 and 41 shown in Figure 2C after assembling the various components in the manner shown in Figure 3.

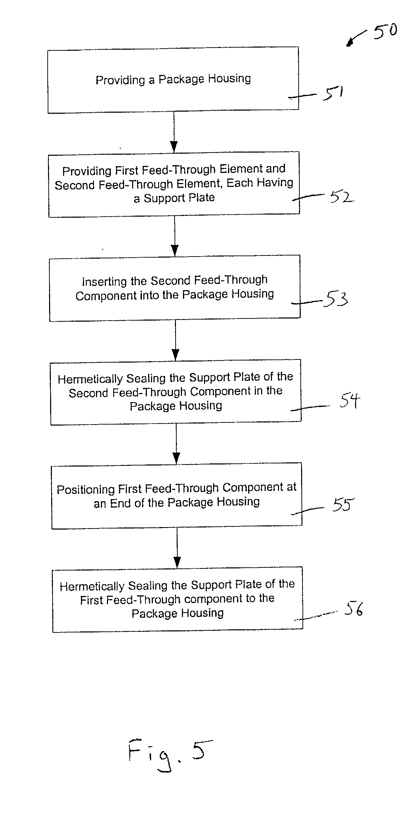

Thus, as can be appreciated by the above discussion and in view of the various corresponding figures, the present invention also provides a method of hermetically sealing an optical component 12 in a package assembly 10 with optical fibers 14 and 15 entering and exiting from the package assembly 10, one example of the present method 50 being illustrated in Figure 5. In accordance with the illustrated embodiment, a package housing is initially provided in step 51. In addition, a first feed-through element and second feed-through element, each having a support plate, are provided in step 52 as shown. In step 53, the second feed-through component is inserted into the package housing such as the one shown in Figures 1-3, preferably together with the optical component. The support plate of the second feed-through element is hermetically sealed in the package housing in step 54. Then, the first feed-through component is positioned at an end of the package housing in step 55 and the support plate of the second feed-through component 24 is then hermetically sealed to the package housing, for instance, by melting and curing a hermetic sealant which are preferably provided as preforms discussed in Figures 2C. In this manner, the first and second feed-through components can be secured to the package housing to hermetically seal an optical component in the package housing. Again, it should be noted that the above described method is merely one example of the present invention and it should be appreciated that the above described steps can be modified in other embodiments.

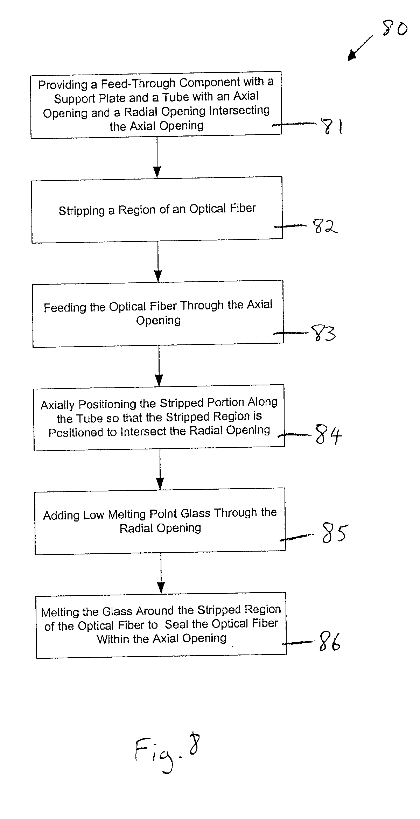

As previously noted, a major difficulty in providing an effective and reliable hermetically sealed package assembly for an optical component is in allowing entry and exit of optical fibers to allow optical connection to other components of the fiber optic system. As can be seen from the embodiment of the present invention as shown in the above noted figures, this is effectively attained by the feed-through components in accordance with the present invention. In this regard, Figure 6 is an enlarged perspective view of a feed-through component 50 in accordance with one embodiment of the present invention which is used for the first feed-through component 20 and/or the second feed-through component 24 as shown in Figures 1, 2A and 3.

As can be seen in Figure 6, the feed-through component 60 includes a tube 62 which is fixedly mounted to a support plate 64 that is to be secured to a package housing in the manner described previously such as by using a hermetic sealant. Both the tube 62 and the support plate 64 of the feed-through component 60 is made of Kovar® or other appropriate material that can be secured to the package housing in the manner previously described. The optical fiber 66 extends through an axial opening 63 in the tube 62 and is hermetically sealed therein in the manner described below to thereby allow entry and exit of the optical fiber 66 into and out of the package housing. In this regard, in the illustrated example, the optical fiber 66 is provided with a connector 68 to allow optical connection to the optical component as discussed previously.

Figure 7 is an enlarged sectional schematic view of the feed-through component 60 of Figure 6 in accordance with one embodiment before the optical fiber 66 is hermetically sealed in the tube 62. As can be seen, optical fiber 66 extends through the tube 62 through the axial opening 63 on the tube 62 that is sized to receive optical fiber 66 therein in the manner shown so that the optical fiber 66 can enter and exit the package housing when the feed-through component is secured to the package housing. The tube 62 in accordance with the present embodiment also includes a radial opening 70 that intersects the axial opening 63 to allow addition of a fiber sealant 72 to seal the axial opening 63 with the optical fiber 66 therein. Whereas the radial opening 70 as shown in the illustrated embodiment is a through hole extending through the tube 62, it need not be in other embodiments as long as it extends to intersect the axial opening 63.

The radial opening 70 is preferably axially positioned along the midsection of the tube 62 so that a stripped region 67 of the optical fiber 66 is positioned to intersect the radial opening 70. In the stripped region 67, the protective outer polymer coating that is present in most optical fibers is removed to expose the outermost glass cladding of the optical fiber. The outer polymer coating is stripped using hot, pressurized nitrogen or by other methods known in the art. It has been found that the outer polymer coatings typically used are somewhat porous and thus, allow moisture to enter the packaging housing. Thus, the stripped region 67, which is approximately 5 mm in length, is provided so that the optical fiber 66 can be hermetically sealed to the feed-through component 60. In the illustrated embodiment, the fiber sealant 72 is a low melting point glass shaped as a ball so that it can be fit into the radial opening 70. The fiber sealant 72 is then melted around the stripped region 67 of the optical fiber 66 by heating it to approximately 450° C. For instance, in the present embodiment, the fiber sealant 72 is Pb-free glass frit known in the related arts. In such an embodiment, a laser such as, for example, a CO₂ laser is used to melt the fiber sealant 72. Use of a laser, although not required, has been found to be particularly advantageous because it allows localized heating and melting of the fiber sealant 72, thereby avoiding damage to the polymer coating of the unstripped portion of the optical fiber 66.

As noted previously, the radial opening 70 is preferably axially positioned along the midsection of the tube 62 thereby allowing sealing of the stripped region 67 of the optical fiber 66. This solves a problem of prior art package assembly and methods in which sealing of the stripped portion is made very difficult due to the length of the tube of the feed through element. In contrast with the prior art, the present invention in the embodiment as described allows the fiber sealant 72 to be delivered to the midsection from the tube 62 thereby avoiding the inadequate sealing problems of approaches in which the fiber sealant is provided through the ends of the tubes of the feed through element. In this regard, it has been found that when the low melting point glass is melted, it extends beyond the radial opening 70 into the axial opening 63 thereby sealing the stripped region 67 of the optical fiber 66 which is in the axial opening 63 as well. It is believed that such sealing is attained via capillary action of the fiber sealant 72 into the axial opening 63 when the fiber sealant 72 is melted. Of course, in other embodiments of the present invention, other fiber sealants made of different materials, such as, for example solders on metallized fibers, polymer plugs with low water uptake, and high temperature glass sealants can be used instead of the low melting point glass. Furthermore, the fiber sealant 72 need not be shaped as a ball but instead, have different shapes or be even provided as granules. Moreover, in other embodiments, the radial opening 70 is provided toward the ends of the tube 62 instead of in the middle of the tube 62.

As can be appreciated by the above discussion and in view of the various corresponding figures, the present invention also provides a method of hermetically sealing an optical fiber in a feed-through component 60 by adding a fiber sealant into the radial opening 70 provided on the tube 62 to seal the axial opening 63 with the optical fiber 66 therein. One example of a present method 80 for hermetically sealing an optical fiber in a feed-through component is shown in the steps of the flow diagram of Figure 8. The present method 80 includes step 81 in which a feed-through component with a support plate is provided. In the manner described above relative to Figures 6 and 7, the preferred embodiment of the tube includes an axial opening and a radial opening intersecting the axial opening. In step 82, a region of the optical fiber is stripped and the optical fiber is fed through the axial opening of the optical fiber in step 83. The optical fiber is positioned along the tube in step 84 so that the stripped region is positioned to intersect the radial opening of the tube. The optical fiber is sealed within the axial opening in step 85 such as by adding a low melting point glass through the radial opening and melting the low melting point glass around the stripped region in step 86. Of course, the above described method is merely one example of the present invention and it should be appreciated that the above described steps can be modified in other embodiments as well.

In addition, it should further be noted that the feed-through component 60 of Figures 6 and 7 and the method in accordance with the present invention as described above relative to Figure 8 can be used for fiber ribbons with a plurality of optical fibers as well instead of just the single optical fiber as shown in the various figures. This may be attained by providing a larger tube with a larger axial opening and a larger radial opening.

In the above described manner, the present invention provides a reliable, simple, and cost effective package assembly and method for hermetically sealing an optical component. It should lastly be noted that while various embodiments in accordance with the present invention have been shown and described, it is understood that the invention is not limited thereto. The present invention may be changed, modified and further applied by those skilled in the art. Therefore, this invention is not limited to the detail shown and described previously, but also includes all such changes and modifications.

## Claims

1. A hermetic package assembly for an optical component having a first and a second optical waveguide fibers extending therefrom, the package assembly comprising:
a package housing defining a compartment sized to receive the optical component therein, the package housing having a first opening and a second opening which is smaller than the first opening;
a first feed-through component coupled to the package housing, the first feed-through component including a first fiber feed-through opening;
and
a second feed-through component coupled to the package housing, the second feed-through component including a second fiber feed-through opening;
wherein the optical component is disposed within the compartment;
wherein the first feed-though component is hermetically sealed to the package housing;
wherein the second feed-through component is hermetically sealed to the package housing;
wherein the first optical waveguide fiber extends from the compartment to the outside of the package assembly through the first fiber feed-through opening, wherein a hermetic seal is formed between the first optical waveguide fiber and first fiber feed-through component; and
wherein the second optical waveguide fiber extends from the compartment to the outside of the package assembly through the second fiber feed-through opening, wherein a hermetic seal is formed between the second optical waveguide fiber and second fiber feed-through component.

2. The package assembly of claim 1, wherein at least one of the first opening and the second opening is sized to allow insertion of the optical component into the compartment.

3. The package assembly of claim 1, wherein the first feed-through component includes a first support plate coupled to the package housing.

4. The package assembly of claim 1, wherein the second feed-through component further includes a second support plate coupled to the package housing.

5. The package assembly of claim 1, wherein at least one of the first feed-through component and the second feed-through component is secured to the package housing by a hermetic sealant.

6. The package assembly of claim 5, wherein the hermetic sealant is a preform having an opening sized to correspond to at least one of the first opening and the second opening, the preform being adapted to be softened and cured to secure the at least one of the first feed-through component and the second feed-through component to the package housing.

7. The package assembly of claim 1, wherein at least one of the first feed-through component and the second feed-through component includes a tube with an axial opening sized to receive an optical fiber therein.

8. The package assembly of claim 7, wherein the tube also includes a radial opening that intersects the axial opening.

9. The package assembly of claim 1, wherein the hermetic seal between the first optical waveguide fiber and first fiber feed-through component is formed from a low melting point glass adapted to be melted around a stripped region of the first optical fiber.

10. The package assembly of claim 1, wherein the hermetic seal between the second optical waveguide fiber and second fiber feed-through component is formed from a low melting point glass adapted to be melted around a stripped region of the second optical fiber.

11. A feed-through component for feeding an optical fiber through a hermetically sealed package comprising:
a support plate adapted to be secured to a housing of the hermetically sealed package; and
a tube with an axial opening sized to receive the optical fiber therein, the tube including a radial opening that intersects the axial opening to allow addition of a fiber sealant to seal the optical fiber within the axial opening.

12. The feed-through component of claim 11, wherein the fiber sealant is a low melting point glass adapted to be melted around the optical fiber.

13. The feed-through component of claim 11, wherein the radial opening is axially positioned along the tube so that a stripped region of the optical fiber is positioned to intersect the radial opening.

14. The feed-through component of claim 13, wherein the fiber sealant is a low melting point glass adapted to be melted around the stripped region of the optical fiber.

15. A method of hermetically sealing an optical component in a package assembly comprising the steps of:
providing a package housing with a compartment sized to receive the optical component therein, the package housing having a first end with a first opening and a second end with a second opening which is smaller than the first opening;
providing a first feed-through component for feeding the optical fiber through the package housing, the first feed-through component including a support plate sized larger than the first opening;
providing a second feed-through component for feeding the optical fiber through the package housing, the second feed-through component including a support plate sized larger than the second opening and smaller than the first opening;
inserting the second feed-through component into the interior compartment of the package housing through the first opening until the support plate abuts the second end of the package housing inside the interior compartment;
securing the support plate of the second feed-through component to the second end of the package housing inside the interior compartment to seal the second opening;
positioning the first feed-through component at the first end of the package housing outside the interior compartment; and
securing the support plate of the first feed-through component to the first end of the package housing outside the interior compartment to seal the first opening.

16. The method of claim 15, further including the step of hermetically sealing the support plate of at least one of the first feed-through component and the second feed-through component to the package housing with a hermetic sealant.

17. The method of claim 16, wherein the hermetic sealant is a preform having an opening sized to correspond to at least one of the first opening and the second opening, the method further comprising the step of melting and curing the preform to secure the at least one of the first feed-through component and the second feed-through component to the package housing.

18. The method of claim 15, wherein at least one of the first feed-through component and the second feed-through component includes a tube with an axial opening sized to receive an optical fiber therein.

19. The method of claim 18, wherein the tube also includes a radial opening that intersects the axial opening, further including the step of adding a fiber sealant into the radial opening to seal the axial opening with the optical fiber therein.

20. The method of claim 19, further including the step of stripping a region of the optical fiber and axially positioning the stripped portion along the tube so that the stripped region of the optical fiber is positioned to intersect the radial opening.

21. The method of claim 20, wherein the fiber sealant is a low melting point glass, and further including the step of melting the glass around the stripped region of the optical fiber.

22. A method of sealing an optical fiber in a feed-through component for feeding an optical fiber through a hermetically sealed package comprising the steps of:
providing a feed-through component with a support plate adapted to be secured to a housing of the hermetically sealed package and a tube with an axial opening sized to receive the optical fiber therein, the tube including a radial opening that intersects the axial opening;
feeding an optical fiber through the axial opening; and
adding a fiber sealant through the radial opening to seal the optical fiber within the axial opening of the feed-through component.

23. The method of claim 22, further including the step of stripping a region of the optical fiber and axially positioning the stripped portion along the tube so that the stripped region of the optical fiber is positioned to intersect the radial opening.

24. The method of claim 23, wherein the fiber sealant is a low melting point glass, and further including the step of melting the glass around the stripped region of the optical fiber.
